# EUROPÄISCHE PATENTSCHRIFT

(11) **EP 0 464 392 B1**
(45) Veröffentlichungstag und Bekanntmachung des Hinweises auf die Patenterteilung: **08.06.1994**
(21) Anmeldenummer: 91109308.6
(22) Anmeldetag: 06.06.1991
(51) Int. Cl.: B23K 26/14

(54) **Verfahren zur Bearbeitung eines metallischen Werkstückes mit einem Laserstrahl**
Process for machining a metal workpiece with a laser beam
Procédé d'usinage d'une pièce métallique avec un faisceau laser

(30) Priorität: 25.06.1990 DE 4020153
(43) Veröffentlichungstag der Anmeldung: 08.01.1992
(73) Patentinhaber: Linde Aktiengesellschaft, 65189 Wiesbaden (DE)
(72) Erfinder: Stenke, Victor, Dipl.-Ing., W-8000 München 21 (DE); Böhme, Dieter, Dr. Dipl.-Ing., W-8023 Pullach (DE)
(74) Vertreter: Schaefer, Gerhard, Dr.

(56) Entgegenhaltungen:
- WO-A-86/00552
- DE-A- 2 338 514
- GB-A- 2 045 141

## Beschreibung

Die Erfindung betrifft ein Verfahren zur Bearbeitung eines metallischen Werkstückes mit einem auf das Werkstück fokussierten Laserstrahl und einem zusätzlich, auf den Brennpunkt des Laserstrahls gerichteten Gasstrahl, wobei durch den Laserstrahl thermisch induziertes Plasma entsteht und als den Gasstrahl bildendes Gas ein kaltes Gas oder ein kaltes Gasgemisch mit einer Temperatur unterhalb Raumtemperatur eingesetzt wird.

Das entstandene Plasma bildet eine Plasmawolke, die durch eine teilweise Absorption der Laserstrahlung den Energieübertrag der Laserstrahlung auf das zu bearbeitende Werkstück bei höheren Leistungsdichten verringert. Schwankungen der entstehenden Plasmamenge führen zu einer ungleichen Bearbeitung des Werkstückes. Beim Laserstrahlschweißen beispielsweise ergibt sich eine Verringerung der Einschweißtiefe bei einer Zunahme der Plasmawolke.

Aus der DE-A-34 24 825 ist ein Verfahren bekannt, bei dem versucht wird, über die Steuerung der Laserintensität die Schwankungen der entstehenden Plasmamenge auszugleichen. Das Verfahren erfordert aber einen großen apparativen Aufwand und damit hohe Kosten.

Es wurde auch versucht, die Bildung des Plasmas über eine Variation des Volumenstromes bzw. der Strömungsgeschwindigkeit des zusätzlich verwendeten Gases zu regeln. Diese Regelung erwies sich jedoch als nicht ausreichend, da die immer noch auftretenden Schwankungen bei der Energieübertragung vom Laserstrahl auf das Werkstück durch die unterschiedliche Plasmaabsorption eine ungleichmäßige Werkstückbearbeitung mit sich bringen.

Aus der GB-A-2 045 141 ist bekannt, bei der Bearbeitung eines metallischen Werkstückes mit einem auf das Werkstück fokussierten Laserstrahl einen Schutzgasstrahl parallel zur Werkstückoberfläche mit hoher Geschwindigkeit einzusetzen. Der Schutzgasstrahl entfernt durch Austrag sowohl das von der Laserstrahlung erzeugte Plasmakissen als auch die in diesem enthaltenen durch die Laserstrahlung aus dem Material des Werkstückes herausgelösten Metallpartikel. Das Schutzgas wird im Kreislauf über die Werkstückoberfläche geleitet, wobei es beispielsweise unter Anwendung von flüssigem Stickstoff gekühlt wird, um im Schutzgas enthaltene flüssige Metallpartikel mittels Kondensation abzutrennen und um die durch die Pumpwirkung erfahrene Erwärmung des Schutzgases zu kompensieren. Als Schutzgas wird in der Regel Helium, gegebenenfalls gemischt mit Neutralgas wie beispielsweise Argon, eingesetzt.

Der Erfindung liegt die Aufgabe zugrunde, ein Verfahren aufzuzeigen, welches auf einfache Art und Weise eine exakte Regelung des thermisch induzierten Plasmas bei der Laser-Metallbearbeitung und damit eine gleichmäßige Werkstückbearbeitung ermöglicht.

Diese Aufgabe wird erfindungsgemäß dadurch gelöst, daß durch die Wahl der Temperatur des kalten Gases oder des kalten Gasgemisches oberhalb der Siedetemperatur des Kaltgases oder Kaltgasgemisches die bei der Bearbeitung entstehende Plasmamenge geregelt und eingestellt wird.

Die Temperatur des Gases oder Gasgemisches beeinflußt direkt die entstehende Plasmamenge und damit die Absorption durch das Plasma. Durch eine unterschiedliche Wahl der Temperatur des eingesetzten Gases oder Gasgemisches kann also ein erwünschter Grad der Plasmabildung eingestellt werden. Damit steht eine Regelmöglichkeit zur Verfügung, die aufgrund ihrer feinen Abstimmbarkeit insgesamt zu einer Qualitätsverbesserung bei der Laser-Metallbearbeitung führt. In bestimmten Fällen kann dadurch sogar eine Verringerung des Volumenstromes des Gases oder Gasgemisches ermöglicht werden.

Besonders Vorteile und eine hohe Variationsbreite bei der Regelung der Plasmabildung stellen sich ein, wenn man den gesamten Temperaturbereich zwischen Raumtemperatur und Siedetemperatur des verwendeten Gases oder Gasgemisches ausnutzt. Mit besonderem Vorteil wird dabei jedoch Gas mit einer Temperatur aus dem Temperaturbereich von ca. 0°C bis ca. -120°C eingesetzt.

Vorzugsweise werden als Gas oder Gasgemisch im erfindungsgemäßen Verfahren Argon und/oder Helium oder Gemische dieser Gase mit Kohlendioxid, Sauerstoff und/oder Stickstoff eingesetzt. Durch die unterschiedliche Zusammensetzung des verwendeten Arbeitsgases werden die Absorptionseigenschaften des induzierten Plasmas zusätzlich beeinflußt.

Damit bietet das erfindungsgemäße Verfahren insgesamt ein Verfahren zur Laser-Metallbearbeitung, daß die zur Qualitätsverbesserung erforderliche Regelung der Plasmabildung außer über die Zusammensetzung des verwendeten Gases oder Gasgemisches und den Volumenstrom vor allem über die Kühlung durch den Einsatz eines kalten Gases oder eines kalten Gasgemisches erreicht. Es erfolgt damit auf eine einfache Weise eine wirksame Regelung der Plasmabildung. Beispielsweise resultiert aus einer verringerten Plasmabildung beim Laserstrahlschweißen eine größere Einschweißtiefe im bearbeiteten Metall.

## Patentansprüche

1. Verfahren zur Bearbeitung eines metallischen Werkstückes mit einem auf das Werkstück fokussierten Laserstrahl und einem zusätzlich, auf den Brennpunkt des Laserstrahls gerichteten Gasstrahl, wobei durch den Laserstrahl thermisch induziertes Plasma entsteht und als den Gasstrahl bildendes Gas ein kaltes Gas oder ein kaltes Gasgemisch mit einer Temperatur unterhalb Raumtemperatur eingesetzt wird, **dadurch gekennzeichnet**, daß durch die Wahl der Temperatur des kalten Gases oder des kalten Gasgemisches oberhalb der Siedetemperatur des kalten Gases oder kalten Gasgemisches die bei der Bearbeitung entstehende Plasmamenge geregelt und eingestellt wird.

2. Verfahren nach Anspruch 1, dadurch gekennzeichnet, daß das kalte Gas oder das kalte Gasgemisch eine Temperatur zwischen ca. 0°C und ca. -120°C aufweist.

3. Verfahren nach einem der Ansprüche 1 oder 2, dadurch gekennzeichnet, daß das kalte Gas oder das kalte Gasgemisch aus Argon und/oder Helium oder Gemischen dieser Gase mit Kohlendioxid, Sauerstoff und/oder Stickstoff besteht.

## Revendications

1. Procédé d'usinage d'une pièce métallique à usiner au moyen d'un faisceau laser focalisé sur la pièce à usiner et d'un jet de gaz supplémentaire dirigé sur le foyer du faisceau laser, de sorte que, grâce au faisceau laser, soit produit du plasma généré thermiquement, et qu'on utilise, comme gaz de formation du jet de gaz, un gaz froid ou un mélange gazeux froid qui est introduit à une température inférieure à la température ambiante, caractérisé en ce que, grâce au choix pour le gaz froid ou le mélange gazeux froid d'une température supérieure à la température d'ébullition du gaz froid ou du mélange gazeux froid, on règle et on contrôle la quantité de plasma générée pendant l'usinage.

2. Procédé selon la revendication 1, caractérisé en ce que le gaz froid ou le mélange gazeux froid présente une température comprise entre environ 0°C et environ -120°C.

3. Procédé selon l'une des revendications 1 ou 2, caractérisé en ce que le gaz froid ou le mélange gazeux froid est composé d'argon et/ou d'hélium ou de mélanges de ces gaz avec du dioxyde de carbone, de l'oxygène et/ou de l'azote.

## Claims

1. Process for machining a metal workpiece with a laser beam focused on the workpiece and an additional stream of gas directed at the focal point of the laser beam, in which plasma induced thermally by the laser beam is formed and a cold gas or a cold gas mixture with a temperature below room temperature is used as the gas forming the stream of gas, characterised in that the quantity of plasma formed during the machining is regulated and set by the choice of the temperature of the cold gas or the cold gas mixture above the boiling temperature of the cold gas or cold gas mixture.

2. Process according to claim 1, characterised in that the cold gas or the cold gas mixture exhibits a temperature between approx. 0°C and approx. -120°C.

3. Process according to one of claims 1 or 2, characterised in that the cold gas or the cold gas mixture consists of argon and/or helium or mixtures of these gases with carbon dioxide, oxygen and/or nitrogen.
